Europäisches Patentamt

European Patent Office

Office européen des brevets

(19)

(11) Veröffentlichungsnummer: **0 167 156 B1**

(12) EUROPÄISCHE PATENTSCHRIFT

(45) Veröffentlichungstag der Patentschrift: 27.02.91

(51) Int. Cl.5: **C01B 33/107**

(21) Anmeldenummer: 85108217.2

(22) Anmeldetag: 03.07.85

(54) Verfahren zur Herstellung von Siliciumtetrachlorid.

(30) Priorität: 06.07.84 DE 3424978
19.10.84 DE 3438444

(43) Veröffentlichungstag der Anmeldung:
08.01.86 Patentblatt 86/02

(45) Bekanntmachung des Hinweises auf die
Patenterteilung:
27.02.91 Patentblatt 91/09

(84) Benannte Vertragsstaaten:
AT BE DE FR GB IT NL SE

(56) Entgegenhaltungen:
EP-A- 0 077 138
DE-C- 375 713
FR-A- 548 691
FR-A- 1 236 728

CHEMICAL ABSTRACTS, Band 69, Nr. 2, 8.
Juli 1968, Seite 398, Zusammenfassung Nr.
4060s, Columbus, Ohio, US; A.A. FURMAN et
al.: "Continuous preparation of silicon tetrachloride", & IZOBRET., PROM. OBRAZTSY,
TOVARNYE ZNAKI 1968,45(8),24

CHEMICAL ABSTRACTS, Band 78, Nr. 18, 7.
Mai 1973, Seite 126, Zusammenfassung Nr.
113467m, Columbus, Ohio, US; & SU-A-361

137 (S.M. KIROV, BELORUSSIAN TECHNOLO-
GICAL INSTITUTE) 07-12-1972

(73) Patentinhaber: WACKER-CHEMIE GMBH
Prinzregentenstrasse 22
D-8000 München 22(DE)

(72) Erfinder: Kratel, Günter, Dr. Dipl.-Chem.
Alpenblickstrasse 10
D-8968 Durach-Bechen(DE)
Erfinder: Loskot, Stefan, Dr. Dipl.-Chem.
Kronenstrasse 18
D-8960 Kempten(DE)

**Beschreibung**

Die Erfindung betrifft die Herstellung von Siliciumtetrachlorid durch Umsetzen von $SiO_2$-haltigem Material mit Chlor in Gegenwart von Kohlenstoff und Katalysator.

Siliciumtetrachlorid wird in großen Mengen als Ausgangsprodukt für die Herstellung von hochdisperser Kieselsäure eingesetzt. Weiterhin dient $SiCl_4$, gegebenenfalls über den Umweg der Darstellung von $SiHCl_3$, als Ausgangsstoff zur Herstellung von Reinstsilicium für Halbleiterzwecke.

Nun fällt Siliciumtetrachlorid bei der Herstellung von Organosiliciumverbindungen und auch bei der Herstellung von Reinstsilicium aus $SiHCl_3$ als an sich unerwünschtes Nebenprodukt an. In der industriellen Praxis wurde deshalb einem Syntheseweg für Siliciumtetrachlorid sowie dessen Folgeprodukte (einschließlich hochdisperser Kieselsäure und Reinstsilicium), der über die an sich bekannte Direktherstellung von Siliciumtetrachlorid aus $SiO_2$-haltigem Material durch Umsetzen mit Chlor führt, keine Beachtung geschenkt.

Der bisher großtechnisch durchgeführte Syntheseweg zur Gewinnung von Halbleitersilicium oder siliciumorganischen Verbindungen führt über die Reduktion $SiO_2$-haltigen Materials zu elementarem Silicium, bzw. Ferrosilicium. Großtechnisch hergestellte Produkte auf Siliciumbasis einschließlich $SiCl_4$ und dessen Folgeprodukte sind deshalb stets mit diesem energie- und kostenträchtigen Syntheseschritt belastet.

Aufgabe der Erfindung war es, einen Syntheseweg für Siliciumtetrachlorid und damit auch einen Syntheseweg für Folgeprodukte des Siliciumtetrachlorids zu finden, der weniger energieaufwendig als der vorstehend beschriebene Syntheseweg über den Reaktionsschritt zu elementarem Silicium ist.

Nun ist gemäß EP-OS 77 138 bereits bekannt, Siliciumtetrachlorid aus $SiO_2$-haltigem Material durch Umsetzen mit Chlor in Gegenwart von Kohlenstoff und Bortrichlorid zu gewinnen. Dieses Verfahren kann bei relativ niedrigen Temperaturen durchgeführt werden und ermöglicht somit im Prinzip die Herstellung von Siliciumtetrachlorid mit relativ geringem Energieaufwand. Nachteiligerweise werden bei diesem Prozeß Borverunreinigungen in das so gewonnene Siliciumtetrachlorid eingeschleppt. Dieses Verfahren scheidet deshalb als Syntheseschritt zur Herstellung von Reinstsilicium für Halbleiterzwecke aus, da selbst ein Borgehalt im einstelligen ppm-Bereich im Halbleitersilicium nicht mehr tragbar ist.

Es wurde nun gefunden, daß die Direktsynthese von Siliciumtetrachlorid aus $SiO_2$-haltigem Material mit Chlor in Gegenwart von Kohlenstoff bei relativ niedrigen Temperaturen in guter Ausbeute verläuft, wenn oberflächenreiche Ausgangssubstanzen eingesetzt werden und Chloride der fünften Haupt- oder Nebengruppe des Perioden-systems als Katalysatoren verwendet werden.

Gegenstand der Erfindung ist ein Verfahren zur Herstellung von Siliciumtetrachlorid durch Umsetzen von $SiO_2$-haltigem Material mit einer BET-Oberfläche von mehr als 0,1 $m^2/g$ mit Chlor in Gegenwart von Kohlenstoff einer BET-Oberfläche von mindestens 0,5 $m^2$/g und Katalysator, ausgewählt aus der Gruppe der Chloride der fünften Haupt- und Nebengruppe, bei einer Reaktionstemperatur von 500 bis 1200 °C.

Vorzugsweise beträgt die spezifische Oberfläche, gemessen nach der BET-Methode, mindestens 3 $m^2$/g.

Beispiele für erfindungsgemäß einzusetzendes $SiO_2$-haltiges Material sind Kieselgur, Kieselkreide, Kieselsäure, Bentonit, Montmorillonit, Magnesiumsilikate, Tone, aluminiumarme Zeolithe, $SiO_2$-haltige Flugstäube u.a.

Erfindungsgemäß wird Kohlenstoff in feinverteilter Form eingesetzt. Die spezifische Oberfläche beträgt vorzugsweise mindestens 5 $m^2$/g nach BET. Beispiele für erfindungsgemäß einzusetzenden Kohlenstoff sind Ruße, Koksstaub, Aktivkohlen u.a.

Die beim erfindungsgemäßen Verfahren katalytisch wirksamen Chloride der fünften Haupt- und Nebengruppe sind insbesondere $POCl_3$, $PCl_5$, $AsCl_3$, , $AsCl_5$, $SbCl_3$ , $SbCl_5$, $BiCl_3$ , $VCl_3$, , $VOCl_3$, $VCl_5$, $NbCl_5$, $TaCl_5$ und ferner solche Substanzen, die unter den erfindungsgemäßen Bedingungen in die obengenannten Chloride umgesetzt werden. Vorzugsweise wird $POCl_3$ eingesetzt.

Das Molverhältnis von $SiO_2$ : Kohlenstoff beträgt 4 : 1 bis 1 : 10, insbesondere 1 : 1,5 bis 1 : 2.

Das Gewichtsverhältnis von Katalysator zur Menge eingesetzten $SiO_2$ beträgt 1:3 bis 1:1000 Gewichtsteile, insbes. 1:3 bis 1:100

Die Reaktionstemperaturen betragen 500 bis 1200 °C, vorzugsweise 700 bis 900 °C.

Zur Durchführung des Verfahrens werden $SiO_2$-haltiges Material, Kohlenstoff und geg. Katalysator in den oben angegebenen Mengenverhältnissen innig vermischt. Ggf. werden die Einzelkomponenten oder deren Mischungen einem Mahlprozeß unterworfen. Vorzugsweise werden die Mischungen in stückiger Form zur Reaktion gebracht. Hierzu werden die Mischungen, die ggf. bis zu 20 Gew.-% Bindemittelanteil enthalten können, als extrudierbare Massen zubereitet und zu Formkörpern verarbeitet. Die Zubereitung erfolgt zweckmäßigerweise durch Aufschlämmen oder Anteigen der Mischungen mit Wasser.

Als Bindemittel kommen beispielsweise Wasserglas, Melasse, Bentonit, Tone, Harze, Polyvinylalkohol, Polyvinylacetat, Zellulose, Stärke u.a. in Betracht.

Beispiele für Formkörper, in denen die erfindungsgemäß umzusetzenden Mischungen zur Reaktion gebracht werden, sind Kugeln, Zylinder, Hohlstränge, Ringe und dergleichen.

Die Mischungen werden schließlich im Chlorstrom, der gegebenenfalls Inertanteile, wie z.B. Stickstoff, enthält, unter Bildung von Siliciumtetrachlorid umgesetzt. Zumeist wird in Rohrreaktoren gearbeitet. Insbesondere für den kontinuierlichen Betrieb sind Fließbettanordnungen zweckmäßig.

Der Katalysator wird zweckmäßigerweise in gasförmigem Zustand in den Reaktor eingetragen. Dies kann in jeder geeigneten Weise erfolgen, beispielsweise durch Beladen des Chlorstroms mit Katalysator oder auch durch separates Zudosieren des Katalysators am Reaktoreintritt.

Das Zielprodukt $SiCl_4$ verläßt den Reaktor in gasförmigem Zustand und wird nach konventionellen Methoden durch Kondensieren und Destillieren aufgearbeitet. Dabei wird mitausgetragener Katalysator wiedergewonnen und in die Reaktionszone zurückgeführt.

Nach dem erfindungsgemäßen Verfahren gelingt es, Siliciumtetrachlorid unter relativ moderaten Bedingungen und somit energie- und kostensparend herzustellen.

Die Erfindung wird nun anhand eines Beispiels näher erläutert:

Beispiel

Es wurde eine Mischung aus 5 Gewichtsteilen Kieselgur (BET-Oberfläche 2 m$^2$/g) und 2 Gewichtsteilen Koksstaub (BET-Oberfläche 3 m$^2$/g) zu 10 mm langen zylinderförmigen Körpern vom Durchmesser 3 mm geformt und bei 400 °C calciniert.

Das calcinierte Gut wurde in einer Menge von 2 kg/h einem Rohrreaktor aufgegeben und bei einer Temperatur von 800 °C einem Chlorstrom von 250 Nl/h ausgesetzt. Der Chlorstrom wurde vor Eintritt in den Reaktor durch eine Vorlage, die mit POCl$_3$ gefüllt war, geleitet und dabei mit 5 Vol-% POCl$_3$ beladen.

Das den Reaktor verlassende Gemisch wurde zunächst auf 90 °C abgekühlt, wobei ausgetragenes POCl$_3$ auskondensierte und in die Vorlage zurückgeführt wurde. Es fielen nach Abkühlen des verbleibenden Gasstroms auf 20 °C 4 kg/h an SiCl$_4$ an.

## Ansprüche

1. Verfahren zur Herstellung von Siliciumtetrachlorid durch Umsetzen von SiO$_2$-haltigem Material mit einer BET-Oberfläche von mehr als 0,1 m$^2$/g mit Chlor in Gegenwart von Kohlenstoff einer BET-Oberfläche von mindestens 0,5 m$^2$/g und Katalysator, ausgewählt aus der Gruppe der Chloride der fünften Haupt- und Nebengruppe, bei einer Reaktionstemperatur von 500 bis 1200 °C.

2. Verfahren nach Anspruch 1, dadurch gekennzeichnet, daß als Katalysator POCl$_3$ eingesetzt wird.

3. Verfahren nach Anspruch 1 oder 2, dadurch gekennzeichnet, daß das Gewichtsverhältnis von Katalysator zur Menge eingesetzten SiO$_2$ 1:3 bis 1:1000 Gewichtsteile beträgt.

## Claims

1. Process for the preparation of silicon tetrachloride by reacting material and having a BET surface area of more than 0.1 m$^2$/g [containing SiO$_2$]with chlorine in the presence of carbon, which has a BET surface area of at least 0.5 m$^2$/g, and a catalyst selected from the group of the chlorides of the fifth main and subsidiary group at a reaction temperature of from 500 to 1200 °C.

2. Process according to Claim 1, characterised in that POCl$_3$ is used as the catalyst.

3. Process according to Claim 1 or 2, characterised in that the weight ratio of catalyst to the amount of SiO$_2$ used ranges from 1 : 3 to 1 : 1000 parts by weight.

## Revendications

1. Procédé de préparation de tétrachlorure de silicium par réaction d'une matière comprenant du SiO$_2$, ayant une surface spécifique BET de plus de 0,1 m$^2$/g, avec du chlore en présence de carbone d'une surface spécifique BET d'au moins 0,5 m$^2$/g et en présence d'un catalyseur pris parmi les chlorures d'éléments du cinquième groupe principal et du sous-groupe de la classification périodique, à une température de 500 à 1200 °C.

2. Procédé selon la revendication 1, caractétisé en ce que l'on utilise comme catalyseur de l'oxychlorure de phosphore POCl$_3$.

3. Procédé selon la revendication 1 ou 2, caractérisé en ce que le rapport pondéral du cataly-

seur à $SiO_2$ est compris entre 1:3 et 1:1000.